(19) Europäisches Patentamt
European Patent Office
Office européen des brevets

(11) **EP 3 252 700 A1**

(12) **EUROPEAN PATENT APPLICATION**

(43) Date of publication:
06.12.2017 Bulletin 2017/49

(51) Int Cl.:
*G06Q 50/06* (2012.01)   *H02J 3/00* (2006.01)

(21) Application number: 17174555.7

(22) Date of filing: 06.06.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 03.06.2016 US 201615173147

(71) Applicant: **ROBERT BOSCH GMBH**
**70469 Stuttgart (DE)**

(72) Inventors:
• **CHEN, Fang**
**Sunnyvale, CA California 94086 (US)**

• **ROY, Binayak**
**Santa Clara CA 95054-4119 (US)**
• **SUBBOTIN, Maksim V.**
**San Carlos, CA California 94070 (US)**
• **AHMED, Jasim**
**Mountain View, CA California 9408 (US)**

(74) Representative: **Isarpatent**
**Patent- und Rechtsanwälte Behnisch Barth
Charles
Hassa Peckmann & Partner mbB
Friedrichstrasse 31
80801 München (DE)**

(54) **METHODS AND SYSTEMS FOR REDUCING A PEAK ENERGY PURCHASE**

(57) A method of controlling an energy storage system to reduce a peak energy procurement includes obtaining a load forecast for an energy consumption system, and, at each of a plurality of predetermined time intervals during a predetermined time period, observing a charge state of an energy storage component and a load presented by the energy consumption system, determining an energy action for the energy storage component as a function of the load forecast, observed load and observed charge state, and executing the determined energy action. Determining the energy action can include composing and optimizing a sample average approximation of a cost function for the energy storage component and energy consumption system, where the sample average approximation is composed by generating a predetermined number of random load trajectories for the energy consumption system, and forming the sample average approximation as an average of a maximum energy purchase function for each of the random load trajectories as a function of the energy action.

FIG. 1

**Description**

## BACKGROUND

In energy distribution networks, such as electric power grids, utility companies charge end users for the amount of energy that they consume during a given billing period. For some types of end users, such as larger power consumers, utilities also charge based on the peak power consumed during the billing period. Thus, for such a user, a given amount of energy consumption evenly drawn from the utility over the billing period will result in lower overall charge than the same amount drawn from the utility in power spikes during the billing period. End users facing a peak demand charge will therefore likely be motivated to reduce the peak energy rate that they demand from the utility.

Previous efforts to reduce the peak energy rate include the use of a battery at the end user's facility to selectively store and release energy drawn from the utility. During periods of low energy consumption by the user, the user may draw more energy than needed from the utility to charge the battery, and then during periods of high energy consumption by the user, the user may use the stored energy from the battery to at least partially lower energy that must be purchased from the utility. The peak energy rate may thereby be reduced if decisions as to when to charge and discharge the battery are properly made.

## SUMMARY

However, there are problems with such systems. As the peak demand reduction approach discussed above relies upon the user timely drawing more energy than needed from the utility during periods of high energy consumption, uncertainty in the location of such periods may greatly decrease the effectiveness of such reduction efforts. For example, if the user experiences an unexpectedly high energy need while the battery is empty or low, the reduction technique may fail altogether. Additionally, batteries typically store energy at less than perfect efficiency. This may further reduce the margin of error available for charging decisions, as every charging event may involve its own energy cost.

Embodiments of the present invention provide methods and systems to utilize energy storage systems in a manner that reduces peak energy demand while effectively accommodating uncertainty in energy consumption needs of the user.

According to an example embodiment of the present invention, a method of operating an energy consumption and storage system to reduce a peak energy purchase by the system includes obtaining a load forecast for an energy consumption system; observing a charge state of an energy storage component and a load presented by the energy consumption system; determining an energy action for the energy storage component as a function of the load forecast, observed load and observed charge state; and executing the determined energy action. For example, in an example embodiment, the determined energy action includes charging the energy storage component at a determined charging rate from an energy generation and supply system, or discharging the energy storage component at a determined discharge rate to power the energy consumption system.

In an example embodiment, selected steps of the method are performed iteratively over a predetermined time period corresponding to a planning horizon, so as to continually adapt to changing conditions. For example, in an example embodiment, the method observes the energy storage component and load, determines the energy action, and executes the determined action at each of a plurality of predetermined time intervals during the predetermined time period. In example embodiments, the method also iteratively obtains the load forecast to further increase the responsiveness of the peak energy purchase reduction.

In an example embodiment, the method iteratively executes selected steps over a plurality of the predetermined time periods, or planning horizons, collectively forming an energy purchase billing period. In such embodiments, the method, for example, tracks a peak energy purchase for the billing period over the plurality of the predetermined time periods.

In an example embodiment, the energy action is determined by composing and optimizing a sample average approximation of a cost function for the energy storage and consumption system, so as to transform what may be an indeterminate cost function into a determinate problem. Composing the sample average approximation can include generating a predetermined number of random load trajectories for the energy consumption system, each including a load at each of the predetermined time intervals based on a corresponding mean and variance of the obtained forecast, and forming the sample average approximation as an average, over the plurality of trajectories, of a maximum difference between the trajectory and a respective energy action for the plurality of time intervals. In an example, the sample average approximation of the cost function is constrained by a maximum charging rate, maximum discharging rate, and maximum capacity of the energy storage component.

In an example, optimizing the sample average approximation of the cost function is performed by converting the sample average approximation to a system of linear inequalities, and providing the system of linear inequalities to an optimization engine for optimizing.

These and other features, aspects, and advantages of the present invention are described in the following detailed description in connection with certain exemplary embodiments and in view of the accompanying drawings, throughout which like characters represent like parts. However, the detailed description and the appended drawings describe and illustrate only particular example embodiments of the invention and are therefore not to be considered limiting of its scope, for the invention may encompass other equally effective embodiments.

## BRIEF DESCRIPTION OF THE DRAWINGS

FIG. 1 is a schematic diagram depicting an energy generation and consumption system, according to an example embodiment of the present invention.

FIG. 2 is a schematic diagram depicting an energy storage system, according to an example embodiment of the present invention.

FIG. 3 is a schematic diagram depicting an energy consumption system, according to an example embodiment of the present invention.

FIG. 4 is a schematic diagram depicting an energy monitoring and control system, according to an example embodiment of the present invention.

FIG. 5 is a schematic diagram depicting an energy action determination component, according to an example embodiment of the present invention.

FIG. 6 is a flowchart depicting a method of operating the energy consumption and storage system, according to an example embodiment of the present invention.

FIG. 7 is a flowchart depicting a method of operating the energy consumption and storage system, according to another example embodiment of the present invention.

FIGS. 8A and 8B are graphs depicting timelines of selected quantities associated with an exemplary simulated performance of the method of FIG. 7.

FIG. 9 is a flowchart depicting a method of operating the energy consumption and storage system, according to another example embodiment of the present invention.

FIGS. 10A-10E are graphs depicting timelines of selected quantities associated with an exemplary simulated performance of the method of FIG. 9.

## DETAILED DESCRIPTION

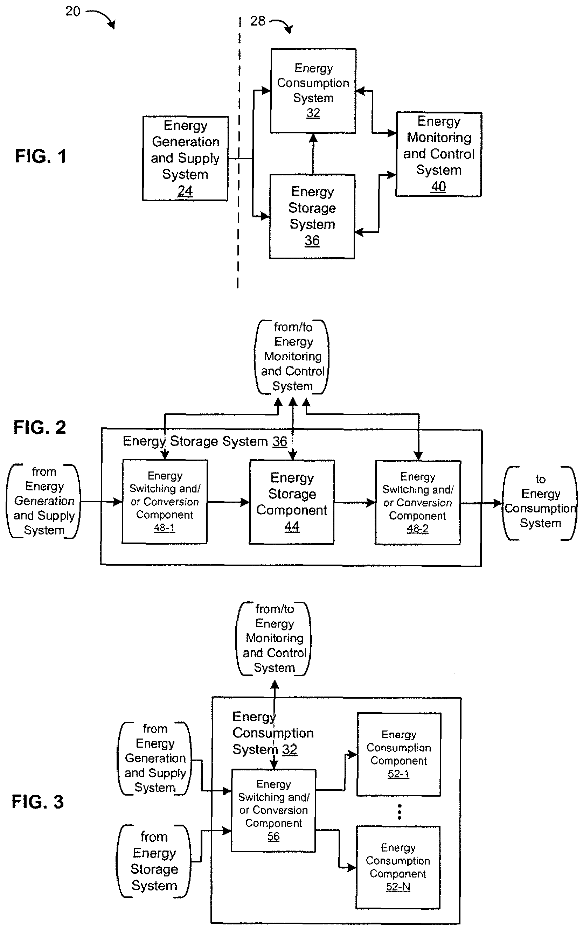

FIG. 1 depicts an example embodiment of an energy generation and consumption system 20, including an energy generation and supply system 24 and an energy consumption and storage system 28.

The energy generation and supply system 24 is configured to generate and supply electrical energy to end users. For example, the energy generation and supply system 24 can include an energy generation component, such as an electrical power plant, to generate energy, and an energy transmission component, such as an electrical transmission grid, to supply the generated energy to end users. The energy generation and supply system 24 can connect to the energy consumption and storage system 28 via the energy transmission component. Components of the energy generation and supply system 24 can be provided by a utility company, such as an electrical utility, and may be located at the utility company's premises and/or the end user's premises.

In an example, the energy consumption and storage system 28 includes an energy consumption system 32, an energy storage system 36, and an energy monitoring and control system 40. The energy consumption system 32 can include one or more components that require a supply of energy, such as electrical power, to operate. The energy consumption system 32 can be connected to and selectively receive energy from both the energy generation and supply system 24 and the energy storage system 36. The energy storage system 36 can include one or more components that store energy, such as electrical energy, for later consumption. The energy storage system 36 can be connected to, and receive energy from, the energy generation and supply system 24, and can provide energy to the energy consumption system 32. The energy monitoring and control system 40 is configured to monitor the state of components of the energy consumption and energy storage systems 32, 36, and provide control signals to control energy actions of those systems. For example, in an example embodiment, the energy monitoring and control system 40 is connected to the energy consumption system 32 and energy storage system 36 to receive and provide signals including monitoring and control information. Components of the energy consumption and storage system 28 can be operated by an end user, such as a business or consumer, and may be located at the end user's premises.

FIG. 2 depicts an example embodiment of the energy storage system 36, including an energy storage component 44, a first energy switching and/or conversion component 48-1, and a second energy switching and/or conversion component 48-2. The energy storage component 44 can include one or more components, such as a battery, etc., that stores energy, such as electrical energy, for later consumption. The energy switching and/or conversion components 48-1, 48-2 (also referred to herein as energy switching and/or conversion component(s) 48) can include a component for energy switching component and/or a component for energy conversion. The component for energy switching can, in response to a control signal from the energy monitoring and control system 40, control whether energy is delivered from the energy power generation and supply system 24 to the energy storage component 44 for storage, in the case of the first switching component 48-1, or from the energy storage system 36 to the energy consumption system 32, in the case of the second switching component 48-2. In an example, the component for energy conversion can provide conversion of energy from one form to another, such as from AC electrical energy to DC electrical energy, or vice versa, as required by the energy storage component 44 and energy consumption system 32, in response to a control signal from the energy monitoring and control system 40.

FIG. 3 depicts an example embodiment of the energy consumption system 32, including one or more energy consumption components 52-1 ... 52-N, and an energy switching and/or conversion component 56. The energy consumption components 52-1 ... 52-N (also referred to herein as energy consumption components(s) 52) can include one more components, such as manufacturing equipment, consumer equipment, etc., that require a supply of energy, such as electrical power, to operate. The switching and/or conversion component 56 can include an energy switching component and/or an energy conversion component, that, for example, controls whether energy is delivered from the energy power generation and supply system 24 or the energy storage system 36 to the energy consumption system 32 in response to a control signal from the energy monitoring and control system 40. In an example, the switching and/or conversion component 56 also provides conversion of energy from one form to another, such as from AC electrical energy to DC electrical energy, or vice versa, as required by the energy consumption system 32, e.g., in response to a control signal from the energy monitoring and control system 40.

In embodiments, the switching and/or conversion components 48, 52 of the energy storage system 36 and energy consumption system 32 are distributed across these systems, as depicted in FIGS. 2 and 3, or are wholly or partially consolidated into one of these systems and omitted from the other system.

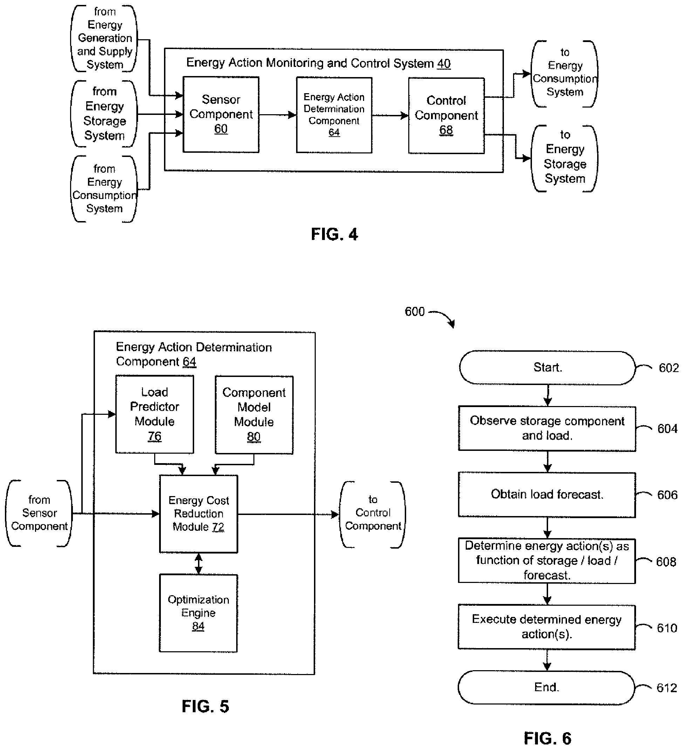

FIG. 4 depicts an example embodiment of the energy monitoring and control system 40 including a sensor component 60, an energy action determination component 64, and a control component 68.

In an example, the sensor component 60 includes one or more of a sensor to sense a state or receiver to receive a sensed state of components of the energy consumption and storage system 28, such as a power level demanded by the energy consumption system 32, a charge state of the energy storage system 36, etc. As indicated, the sensor component 60 can include either sensors themselves or components to receive signals from sensors. The sensors can include voltage level sensors, current level sensor, power level sensors, etc.

The energy action determination component 64 can receive an output from the sensor component 60, such as information representing the power level demanded by the energy consumption system 32, the charge state of the energy storage system 36, etc. The energy action determination component 64 can then determine, by performing operations discussed below, a corresponding energy action for one or more of the energy consumption system 32 and energy storage system 36, such as selectively providing power to the energy consumption system 32 from the energy generation and supply system 24 or from the energy storage system 36, based on output of the sensor component 60. The energy action determination component 64 can provide an output signal to the control component 68 indicating the determined energy action.

In an example embodiment, the control component 68 is configured to provide control signals to the energy consumption system 32 and energy storage system 36 to implement determined energy actions for these systems, such as to selectively control delivery of energy from the energy generation and supply system 24 to the energy storage system 36 and the energy consumption system 32, and from the energy storage system 36 to the energy consumption system 32.

FIG. 5 depicts an example embodiment of the energy action determination component 64, including an energy cost reduction module 72, a load predictor module 76, a component model module 80 and an optimization engine module 84. The energy cost reduction module 72 is configured to receive one more of observed information from the sensor component 60, such as a power level demanded by the energy consumption system 32, a charge state of the energy storage system 36, etc.; prediction information from the load predictor module 76, such as a predicted mean and variance of a power level to be demanded by the energy consumption system 32 at specified time intervals and time periods in the future; and model information from the component model module 80, such as a storage component efficiency, etc. The energy cost reduction module 72 is configured to optimize a peak energy cost function for an identified billing period based on the received information, such as by composing a sample average approximation of the peak energy cost function and optimizing the sample average approximation, to determine a minimum cost solution to the peak energy cost function and an associated energy action to implement the minimum cost solution. In an example, to perform the optimization, the energy cost reduction module 72 transforms a composed sample average approximation of the cost function to a format required by the optimization engine 84, sends the formatted sample average approximation to the optimization engine 84, and receives the optimized solution from the optimization engine 84. The energy cost reduction module 72 can then output an indication of the determined energy action to the control component 68.

In an example, the load predictor module 76 is configured to receive observed information from the sensor component 60, such as a power level demanded by the energy consumption system 32, and provide a load forecast to the energy cost reduction module 72, such as a predicted mean and variance of a power level to be drawn by the energy consumption system 32 at specified time intervals for time periods in the future. The forecast can be based on, for example, a load of a most recent period or corresponding period (e.g., a period of the prior year corresponding to the current period), or an average of loads for a plurality of prior periods, etc. Any suitably appropriate forecasting method and bases for forecasting can be used.

In an example, the component model module 80 is configured to provide parameters characterizing other components of the energy consumption and storage system 28 to the energy cost reduction module 72, such as an energy storage efficiency of an energy storage component 44 of the energy storage system 36.

The energy action monitoring and control system 40 can be implemented to selected degrees in hardware or software. In an example embodiment, energy action monitoring and control system 40 includes a processor and a non-transitory storage medium on which are stored program instructions that are executable by the processor, and that, when executed by the processor, cause the processor to perform embodiments of methods of operating the energy consumption storage system, such as embodiments of methods depicted in FIGS. 6, 7 and 9 discussed below.

FIG. 6 is a flowchart that illustrates a method 600 of operating the energy consumption and storage system 28 so as to reduce a peak energy rate purchased by the system 28 in an improved manner, according to an example embodiment of the present invention. At step 602, the example method 600 begins, for determining energy actions for components of the energy consumption and storage system 28, such as selectively purchasing energy to charge the energy storage component 44 from the energy generation and supply system 24 or discharging the energy storage component 44 to power the energy consumption components 52, that minimize an energy cost function based on an observed state of the energy consumption system 32 and energy storage system 36, such as a charge state of the energy storage component 44 and a load presented by the energy consumption components 52, and a load forecast, such as forecast mean and variance of the load. Such determined energy actions can accurately and consistently identify or approach maximum peak energy rate reduction.

At step 604, energy states of the energy storage component 44 and the energy consumption components 52 are observed. For example, a charge state of the energy storage component 44, such as a voltage or percentage charge, and load presented, i.e., a power demanded, by the energy consumption components 52, such as an electrical power, can be observed, e.g., using the sensor component 60 of the energy action monitoring and control system 40. For example, a voltage sensor or chemical potential sensor can be used to sense a voltage or percentage charge of a battery. A current and/or voltage sensor can be used to sense an electrical power drawn by the energy consumption components 52.

At step 606, a forecast of the load to be presented, i.e., the power demanded, in the future by the energy consumption components 52 is obtained. For example, in an example, as forecast mean and variance of the load are obtained. The load forecast can be obtained for specified time points for a specified time period into the future. For example, the load forecast can be obtained for time points separated by a specified time interval, such as a predetermined number of minutes or hours, e.g., 15 minutes, 1 hour, etc., starting at the present time and for a predetermined period of time into the future, such as a remaining period of time in a current utility billing period, e.g., a remaining number of days in the current billing period. The load forecast can be obtained from the load predictor 76. The load predictor 76 can predict the load based on a present load, a load history, and/or component models for the energy consumption components 52.

At step 608, an energy action is determined for the energy storage component 44 as a function of the observed state of the energy storage component 44 and energy consumption components 52 and the obtained load forecast.

For example, an energy action can be determined at step 608 for charging or discharging the energy storage component 44 so as to minimize a maximum power purchased from the energy generation and supply system 24 for the current billing period. An ideal energy action can be determined as a charge or discharge action that minimizes a cost function of the energy consumption and storage system 28. In an example embodiment, the energy action is constrained to lie within operational limits of the energy storage component 44, which, in an example, is represented as follows:

$$0 \leq s_1 - \sum_{i=1}^{t} u_i \Delta t \leq C, \ \forall t \in 1, \cdots, T \qquad (1)$$

$$-P\max \leq u_t \leq P\max, \ \forall t \in 1, \cdots, T \qquad (2)$$

where $S_t$ is the charge state of the energy storage component 44 at time t ($s_1$ in the above equation referring to the charge state at a first moment in time t), ranging from 0% C, i.e., empty, to 100% C, i.e., full; C is the energy storage component capacity; Pmax is the maximum discharge power of the energy storage component; -Pmax is the maximum charge power of the energy storage component. Constraint (2) limits the charge state of the energy storage component 44 to be between zero and the charge capacity of the energy storage component 44. Constraint (3) limits the energy action to be between maximum charging and discharging powers for the energy storage component 44. In an example, the optimization of the cost function is represented as follows:

$$J = \min_{u} \left\{ E\left( d \cdot \max_{t=1,\cdots,T} (L_t - u_t) \right) \mid \text{constraints } (1), (2) \right\} \qquad (3)$$

where J is the minimized cost function; $u \left( of \frac{min}{u} \right)$ is ($u_1$, ..., $u_T$), a vector of energy actions from time 1 to time T; E is a cost function for the energy consumption and storage system 28; d is a peak energy rate cost; $t \in 1, \cdots, T$ is a time index of the problem; T is a planning horizon; $\Delta t$ is the predetermined time interval, e.g., between t and t+1; $L_t$ is a random load at time t; $u_t$ is an energy action power at time t, where $u_t < 0$ represents charging and $u_t > 0$ represents discharging; and $L_t - u_t$ is an energy purchase at time t, which may also be referred to as $g_t$ (referenced below by the term gmax). The optimization of the cost function essentially looks for an energy purchase $g_t$ at each time t that minimizes the expected cost function.

A direct minimization of the above cost function to determine a corresponding energy action may be indeterminate because the load at any given time in the future may be unknown. However, in an example embodiment, a forecast of the mean and variance of the load is made, and a minimization of the cost function to determine a corresponding energy action is performed based on such a forecast load mean and variance. For example, the above cost function can be converted to a deterministic function based on such a forecast load mean and variance, and a solution then obtained. A sample average approximation method can be used to create a stochastic model approximating the underlying cost function by sampling the possible load vectors based on the forecast load mean and variance, and then an equivalent deterministic function based on the model can be optimized. The cost function alternatively can be converted to a deterministic function based on the forecast load mean and variance in other ways.

In an example embodiment, composing the sample average approximation proceeds as follows. A predetermined number N of random load trajectories $\{\xi^1, \xi^2, ..., \xi^N\}$ is generated according to the forecast load mean and variance. Each trajectory can be expressed as $\xi^i = \{\xi_1^i, \xi_2^i, \cdots, \xi_T^i\}$, where $\xi_t^i$ is a random realization of the load Lt according to the forecast mean and variance, expressed as $L_t \sim N(\mu_t, \sigma_t^2)$. The optimization of the cost function can then be restated as follows:

$$J = \min_{u \in U} \left\{ \hat{f}_N(u) := N^{-1} \sum_{i=1}^{N} \max_{t \in \{1,\cdots,T\}} (\xi_t^i - u_t) \right\}, \qquad (4)$$

where $\hat{f}_N(u)$ is a sample average approximation of the cost function for the energy consumption and storage system 28, and U is a region of feasible energy actions defined by the constraints (1) and (2).

A solution to the optimization of the sample average approximation of the cost function can be deterministic. Optimizing of the sample average approximation of the cost function can be performed using an optimization tool. The restated cost function can be converted into a format required by an optimization tool. For example, an existing linear optimization tool, such as the linprog function of the MatLab software tool provided by MathWorks, Inc., can optimize a

stated function $f^Tx$ for x, where $f^Tx$ is the multiplication of a row vector of constants f and a column vector of variables x, constrained by linear inequalities $A x \leq b$; where A is a matrix of constants and b is a vector of constants, linear equalities $Aeq\ x = beq$, where Aeq is a matrix of constants and beq is a vector of constants; and bounds $1b \leq x \leq ub$, where lb is a lower bound for x and ub is an upper bound for x. The above sample average approximation of the cost function can be converted into such a format by introducing a set of auxiliary variables q1, q2, ... qN, where

$$qi = \max_{t \in \{1, ..., T\}} \left( \xi_t^i - ut \right),$$ and composing the function f as 1/N (q1 + q2 + ... qN) and linear inequalities as

$$qi \geq \xi_t^i - ut$$ for t = 1, ..., T, for input to the linprog function to solve for an optimal energy action u. Other optimization tools can also be used to optimize the sample average approximation of the cost function.

Returning to FIG. 6, at step 610, the energy action determined to minimize the cost function for the energy consumption and storage system 28 is implemented. For example, the energy storage component 44 can be charged by connecting the energy storage component 44 to the energy generation and supply system 24, or discharged to power the energy consumption system 32 by connecting the energy storage component 44 to the energy consumption system 32, according to the determined energy action under control of the control component 68. The method ends at step 612.

Embodiments of the method of FIG. 6 may include steps or sub-steps executed in an iterative fashion at each of a plurality of predetermined time intervals during a predetermined time period. For example, the method can perform one or more of observing the storage component 44 and load, determining an optimized energy action, and executing the determined energy action at each of a plurality of predetermined time intervals over a predetermined time period. The predetermined time intervals and predetermined time period can be selected to provide a desired peak energy reduction performance, such as by providing sufficient time resolution to suitably track a varying load, and an acceptable computational requirement, such as by limiting the time resolution or time period. For example, in one example, the method performs iterative steps every 15 minutes for a planning horizon of one day.

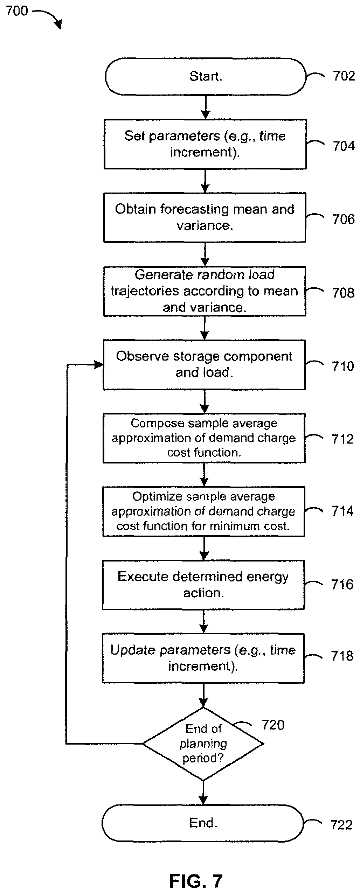

FIG. 7 depicts an example embodiment 700 of the method of operating the energy consumption and storage system of FIG. 6, showing further details of an iterative execution of the method in which an optimized energy action is determined and executed at each of a plurality of predetermined time intervals over a predetermined time period. The method begin sat step 702.

At step 704, parameters related to the iterative execution of the method are set. For example, one or more of a starting time, a predetermined time interval, and a predetermined time period can be set. For example, to begin execution of the method at the start of a one day period, with iterations every 15 minutes, a current time t can be set to 1, a time interval $\Delta t$ can be set to 0.25 hours, and a predetermined time period T can be set to 24 hours.

At step 706 a forecast load, such as a forecast mean and variance of the load, is obtained. The load forecast can be obtained for each of the predetermined time intervals over the predetermined time period. Continuing the example mentioned with respect to step 704, the load forecast can include a forecast load mean and variance, such as a predicted mean power demand in kW and a variance of the power demand in kW, at intervals of 15 minutes for a time period of 24 hours. As discussed above, the load forecast can be obtained from the load predictor module 76, which can forecast the load based on one or more of a current load, a load history, component models, etc.

At step 708, a predetermined number N of random load trajectories is determined according to the forecast load mean and variance. Each of the load trajectories can include a random load value at each of the predetermined time intervals, the randomization weighted according to the corresponding forecast mean and variance. Continuing the above example, each load trajectory can include a random load value in kW at intervals of 15 minutes for a time period of 24 hours. The randomized load values can be obtained from a random number generator configured to operate according to a selected mean and variance.

The predetermined number N can be selected to provide a result sufficiently close to an optimal peak energy reduction. In general, a larger number N can provide a result closer to an optimal result, but require greater computational power to execute the calculations of the method, while a smaller number N can provide a result less close to an optimal result, but require less computational power to execute the calculations of the method. To select the predetermined number N, the method can be performed at a range of values of the predetermined number N, and the results evaluated to determine the value of the number N for which the peak reduction is within a predetermined amount of an optimal result. For example, the method can be performed multiple times, beginning with a low N value and gradually increasing the N value for later iterations, until an N value is obtained that provides a result within an acceptable range of the ideal result, in order to avoid the computational intensity required for obtaining the most ideal result.

At step 710, an energy state of the energy storage component 44 and the energy consumption components 52 is observed for the current time t. The energy state can include a charge state $S_t$ of the energy storage component 44 and a current load $l_t$ presented by the energy consumption components 52. Continuing the above example, a current charge level as a certain percentage can be observed for the energy storage component 44, and a power level in kW can be observed as being currently demanded by the power consumption components. As discussed above, the energy state of the energy storage component 44 and energy consumption components 52 can be observed using the sensor component 60. Alternatively, the energy state of the energy storage component 44 can be observed from a previously calculated energy state, such as updated during step 718 discussed below.

At step 712, a sample average approximation of the demand charge cost function is composed for the current time interval based on the generated random load trajectories and currently observed energy states of the energy storage and energy consumption components. The sample average approximation can take the form shown in equations (1), (2) and (4).

At step 714, the generated sample average approximation of the demand charge cost function is optimized to determine a corresponding current energy action $u_t$. The determined energy action can include a charging power to be delivered for the current time interval to the energy storage component 44 from the energy generation and supply system 24, or a discharging power to be delivered for the current time interval from the energy storage component 44 to the energy consumption system 32. Continuing the above example, a charging or discharging power in kW can be determined. As discussed above, the sample average approximation can be optimized by converting it into a form for input to the optimization engine 84, and then input to the optimization engine 84 for optimization to determine a corresponding energy action. At any given time t during the predetermined time period T, a certain number of energy actions may have already been calculated for previous times during previous iterations of the method, and the form of the optimization problem can be restated to incorporate such energy actions at corresponding times in place of respective load trajectory values, by replacing the cost function as follows:

$$\hat{f}_N(u) := \tfrac{1}{N} \textstyle\sum_{i=1}^{N} \max(l_1 - \bar{u}_1, \cdots, l_{t-1} - \bar{u}_{t-1}, l_t - u_t, \xi_{t+1}^i - u_{t+1}, \xi_T^i - u_T) \qquad (5)$$

Also, at each iteration, an energy action vector can be determined for each of the remaining times in the predetermined time period, although only the energy action for the current time t is typically executed, as the remaining energy actions can be redetermined using updated observations in subsequent iterations.

At step 716, the determined energy action is executed for the energy storage component 44. The determined energy action can include a charging power to be delivered for the current time interval to the energy storage component 44 from the energy generation and supply system 24, or a discharging power to be delivered for the current time interval from the energy storage component 44 to the energy consumption system 32. Continuing the above example, a charging or discharging power in kW may have been determined. As discussed above, the energy storage component 44 can be charged by connecting the energy storage component 44 to the energy generation and supply system 24, or discharged by connecting the energy storage component 44 to the energy consumption system 32. Although a certain charging or discharging power can be calculated for the current time interval, execution of the energy action also can implement a different but equivalent charging or discharging, such as charging or discharging at a related higher rate for a correspondingly shorter period, etc.

At step 718, parameters related to the iterative execution of steps of the method are updated. For example, one or more of the current time and a current energy state of the energy storage component can be updated. The current time can be updated by adding the predetermined time interval to the previous current time, and the energy state of the energy storage component 44 can be updated by adding an amount based on a rate of the energy action multiplied by the time interval. Continuing the above example, the current time can be updated by adding 0.25 hours, and the energy state of can be updated by adding an amount based on the energy action rate multiplied by 0.25 hours.

At step 720, whether the end of the predetermined time period, i.e., the planning horizon, has been reached is determined. If the end of the planning horizon has been reached, the method proceeds to step 722, where the method ends. If the end of the planning horizon hasn't been reached, the method proceed to step 710, for repeating the iterative portion of the method until the end of the planning horizon is reached.

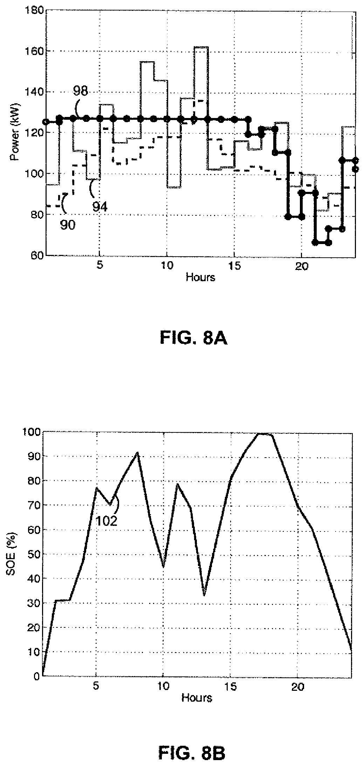

FIG. 8A is a graph depicting a timeline of selected quantities associated with an exemplary simulated performance of the method 700 of FIG. 7, including a forecast mean load 90, an actual realized load 94, and an energy purchase 98 for one hour time intervals over a 24 hour period. FIG. 8B is a graph depicting a timeline of a charge state 102 of the energy storage component 44 for the exemplary simulated performance of the method depicted in FIG. 8A. As can be seen, energy purchases are used to effectively charge the energy storage component 44 during periods of low realized load, and reduce the maximum energy purchase from 163.70 kW without the described control of the energy storage system 36 to 127.05 kW with the described control of the energy storage system 36.

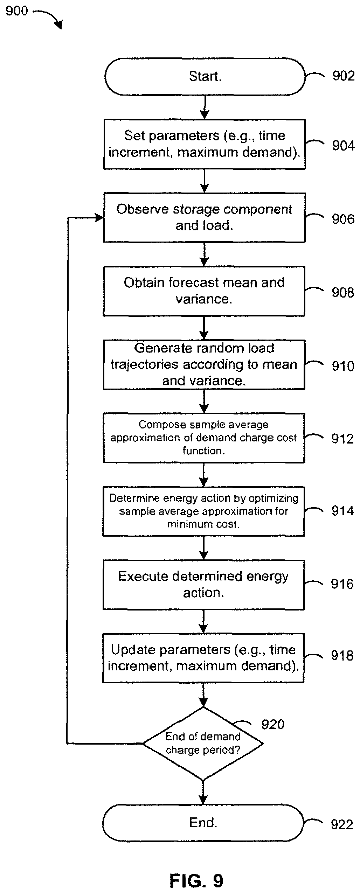

Other example embodiments of the method of operating the energy consumption and storage system may allocate different combinations of steps or sub-steps for iterative execution at each of a plurality of time intervals over a predetermined time period. For example, the method described below with respect to FIG. 9 includes additional steps not discussed with respect to the method illustrated in FIG. 7.

Additionally, example embodiments of the method, such as that described with respect to FIG. 9, enable minimizing the demand charge for a predetermined billing period different than the planning horizon over which the method iteratively optimizes the energy action. For example, the predetermined time period over which the method iteratively optimizes the energy action, i.e., the planning horizon, can be selected to be smaller than the billing period in order to reduce the computational cost of executing the method. In an example of such embodiments, the method tracks a peak energy purchase over the course of a billing period and determines energy actions to minimize the demand charge in view of both a current planning horizon and the peak energy purchase so far for the billing period.

FIG. 9 depicts another embodiment 900 of the method of operating the energy consumption and storage system of FIG. 6, showing further details of another allocation of steps to an iterative execution, in which the load forecast is iteratively determined, and which accommodates a planning horizon different that the billing period. Many aspects of the steps of the embodiment of FIG. 9 are similar to corresponding steps of the embodiment of FIG. 7, and these will not be discussed in detail in the following, which will instead focus on the aspects of the embodiment of FIG. 9 that differ from the embodiment of FIG. 7. The method begins at step 902.

At step 904, parameters related to the iterative execution of steps of the method are set, similar to as in step 704. In addition to the parameters discussed in step 704, the current planning horizon k within the billing period and an existing peak energy purchase gmax for the current billing period are set. For example, referring to equations (6)-(8) discussed below, to begin execution at the start of a one month billing period, with one day planning horizons and iterations every 15 minutes, a current time planning horizon k can be set to 1, t can be set to 1, a time interval $\Delta t$ may be set to 0.25 hours, and a predetermined time period T can be set to 24 hours.

At step 906, an energy state of the energy storage component 44 and the energy consumption components 52 are observed for the current time t, similar to as in step 710.

At step 908, a forecast load mean and variance is obtained, similar to as in step 706. The load forecast can be obtained for each of the predetermined time intervals over the planning horizon.

At step 910, a predetermined number N of random load trajectories is determined according to the forecast load mean and variance, similar to as in step 708.

At step 912, a sample average approximation of the demand charge cost function is composed for the current time interval based on the generated random load trajectories, currently observed energy states of the energy storage component 44 and the energy consumption components 52, and present peak energy purchase for the billing period, similar to as in step 712, although modified to accommodate a different planning horizon and billing period. To accommodate different a planning horizon and billing period, in an example embodiment, the optimization of equation (3) is modified as follows:

$$J = \min_{u \in U_{k,t}} \left\{ f(u) := E(Q(gmax, u)) \right\} \qquad (6)$$

where

$$Q(gmax, u) = \max(gmax, l_{kt} - u_{k,t}, \xi^i_{k,t+1} - u_{k,t+1}, \ldots, \xi^i_{k,T} - u_{k,T}) \qquad (7)$$

and where k is the current planning horizon and gmax is the present peak energy purchase for the billing period. In an example embodiment, the sample average approximation of the cost function is correspondingly adapted as follows:

$$\hat{J} = \min \left\{ \hat{f}(u) := N^{-1} \sum_{i=1}^{N} Q(gmax, u) \right\} \qquad (8)$$

That is, the optimziation iterating over the planning horizon now accounts for the present peak energy purchase during the billing period.

At step 914, the generated sample average approximation of the demand charge cost function is optimized to determine a corresponding current energy action $u_{kt}$, similar to as in step 714, although, because the method of FIG. 9 iteratively obtains the load forecast, in step 914 new remaining trajectory values can be used in equation (5) for each iteration, which can further improve the performance of the method by providing the ability to continuously improve the accuracy of the forecast.

At step 916, the determined energy action is executed for the energy storage component 44, similar to as in step 716.

At step 918, parameters related to the iterative execution of steps of the method are updated, similar to as in step 718. In addition to the parameters discussed in step 718, the peak energy purchase gmax for the current billing period can be updated and the current planning horizon k can be updated until the billing period length K is reached. The planning horizon is updated if the current time interval has concluded the current planning horizon. If the planning horizon is updated, the current time interval is reset to one to start the new planning horizon at the beginning.

At step 920, it is determined both whether the end of the current planning horizon has been reached and whether the end of the billing period has been reached. If the end of the current planning horizon and the billing period have both been reached, the method proceed to step 922, where the method ends. If the end of either the current planning horizon or the current billing period hasn't been reached, the method proceeds to step 906, where the iterative portion of the method repeats until the end of both the planning horizon and billing period is reached.

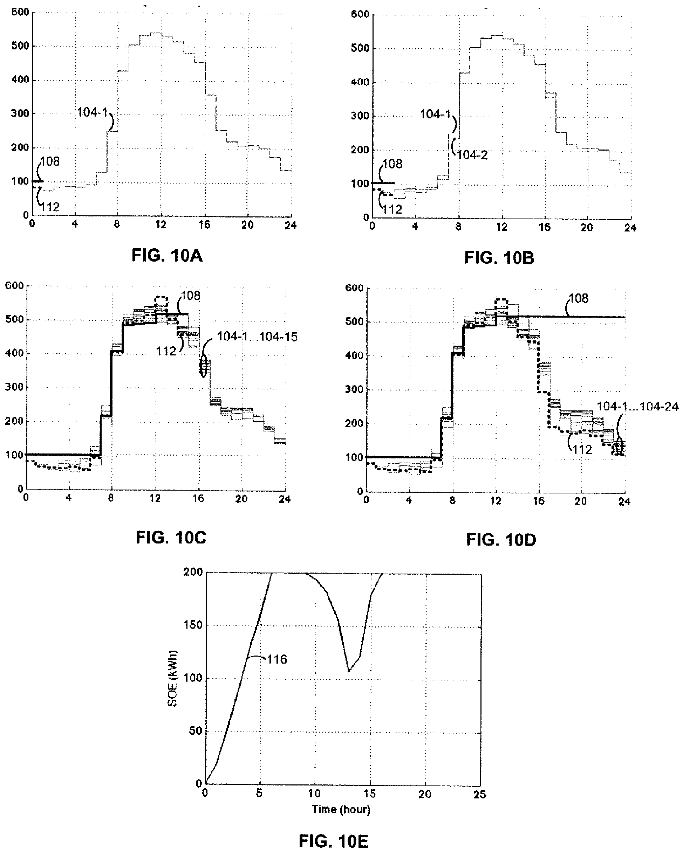

FIGS. 10A-10E are graphs depicting timelines of selected quantities associated with different times of an exemplary simulated performance over a single planning horizon of the method of FIG. 9. FIG. 10A shows a forecast mean load 104-1, a present maximum energy purchase 108, and an actual load 112 for the first of one hour time intervals over a 24 hour period. FIG. 10B shows previous and new forecast mean loads 104-1, 104-2, the present maximum energy purchase 108, and an actual load 112 by the second of the one hour time intervals over the 24 hour period. FIG. 10C shows the previous and new forecast mean loads 104-1 ... 104-15, the present maximum energy purchase 108, and an actual load 112 by the 15th of the one hour time intervals over the 24 hour period. FIG. 10D shows all of the forecast mean loads 104-1 ... 104-24, the present maximum energy purchase 108, and the actual load 112 at the end of the 24 hour period. FIG. 10E shows a charge state 116 of the energy storage component 44 for the exemplary simulated performance depicted in FIGS. 10A-10D. As can be seen, the energy purchases are used to effectively charge the energy storage component 44 during periods of low realized load, and reduce the peak energy purchase during the planning horizon.

Additional embodiments of the energy consumption and storage system 28, energy storage system 36, energy action determination component 64 and methods 600, 700, 900 of operating the energy storage and consumption system 28 are possible. For example, any feature of any of the embodiments of the energy consumption and storage system 28, energy storage system 36, energy action determination component 64 and methods 600, 700, 900 of operating the energy storage and consumption system 28 described herein may be used in any other embodiment of the energy consumption and storage system 28, energy storage system 36, energy action determination component 64 and methods 600, 700, 900 of operating the energy storage and consumption system 28. Also, embodiments of the energy consumption and storage system 28, energy storage system 36, energy action determination component 64 and methods 600, 700, 900 of operating the energy storage and consumption system 28 may include only any subset of the components or features of the energy consumption and storage system 28, energy storage system 36, energy action determination component 64 and methods 600, 700, 900 of operating the energy storage and consumption system 28 discussed herein.

An example embodiment of the present invention is directed to one or more processors, which may be implemented using any conventional processing circuit and device or combination thereof, e.g., a Central Processing Unit (CPU) of a Personal Computer (PC) or other workstation processor, to execute code provided, e.g., on a non-transitory computer-readable medium including any conventional memory device, to perform any of the methods described herein, alone or in combination. The one or more processors can be embodied in a server or user terminal or combination thereof. The user terminal can be embodied, for example, as a desktop, laptop, hand-held device, Personal Digital Assistant (PDA), television set-top Internet appliance, mobile telephone, smart phone, etc., or as a combination of one or more thereof. The memory device can include any conventional permanent and/or temporary memory circuits or combination thereof, a non-exhaustive list of which includes Random Access Memory (RAM), Read Only Memory (ROM), Compact Disks (CD), Digital Versatile Disk (DVD), and magnetic tape.

An example embodiment of the present invention is directed to one or more non-transitory computer-readable media, e.g., as described above, on which are stored instructions that are executable by a processor and that, when executed by the processor, perform the various methods described herein, each alone or in combination or sub-steps thereof in isolation or in other combinations.

An example embodiment of the present invention is directed to a method, e.g., of a hardware component or machine, of transmitting instructions executable by a processor to perform the various methods described herein, each alone or in combination or sub-steps thereof in isolation or in other combinations.

The above description is intended to be illustrative, and not restrictive. Those skilled in the art can appreciate from the foregoing description that the present invention can be implemented in a variety of forms, and that the various embodiments can be implemented alone or in combination. Therefore, while the embodiments of the present invention have been described in connection with particular examples thereof, the true scope of the embodiments and/or methods of the present invention should not be so limited since other modifications will become apparent to the skilled practitioner upon a study of the drawings, specification, and following claims.

**Claims**

1. A method of controlling an energy storage system to reduce a peak energy procurement, the method comprising:

   obtaining a load forecast for an energy consumption system;
   at each of a plurality of predetermined time intervals during a predetermined time period:

   observing a charge state of an energy storage component and a load presented by the energy consumption system;
   determining an energy action for the energy storage component as a function of the load forecast, observed load and observed charge state; and
   executing the determined energy action.

2. The method of claim 1, wherein determining the energy action includes composing and optimizing a sample average approximation of a cost function for the energy storage component and energy consumption system.

3. The method of claim 2, wherein composing the sample average approximation of the cost function includes generating a predetermined number of random load trajectories for the energy consumption system, each load trajectory including a random load at each of the predetermined time intervals based on a respective forecast mean and variance of the obtained load forecast.

4. The method of claim 3, wherein the sample average approximation of the cost function is formed as an average, over the plurality of random load trajectories, of a maximum difference between the load trajectory and respective energy actions for the plurality of time intervals.

5. The method of claim 4, wherein the sample average approximation of the cost function is constrained by a predetermined maximum charging rate, a predetermined maximum discharging rate, and a predetermined maximum capacity of the energy storage component.

6. The method of claim 2, wherein optimizing the sample average approximation of the cost function includes determining the energy action that minimizes the sample average approximation of the cost function.

7. The method of claim 2, wherein optimizing the sample average approximation of the cost function includes converting the sample average approximation to a system of linear inequalities, and providing the system of linear inequalities to an optimization engine.

8. The method of claim 1, wherein obtaining the load forecast includes obtaining a mean and a variance of the load forecast.

9. The method of claim 1, wherein the load forecast is obtained at each of the plurality of predetermined time intervals during the predetermined time period.

10. The method of claim 1, wherein the determined energy action includes at least one of:

    charging the energy storage component at a determined charging rate with procured energy and discharging the energy storage component at a determined discharge rate to power the energy consumption system.

11. The method of claim 1, further comprising iteratively executing the observing the charge state and load, the determining the energy action, and the executing the determined energy action over a plurality of the predetermined time periods collectively forming an energy procurement period, and tracking a peak energy procurement for the energy procurement period over the plurality of the predetermined time periods.

12. A non-transitory, machine-readable storage medium on which are stored program instructions that are executable by a processor and that, when executed by the processor, cause the processor to perform a method of controlling an energy storage system to reduce a peak energy procurement, the method comprising:

    obtaining a load forecast for an energy consumption system;
    at each of a plurality of predetermined time intervals during a predetermined time period:

observing a charge state of an energy storage component and a load presented by the energy consumption system;

determining an energy action for the energy storage component as a function of the load forecast, observed load and observed charge state; and

executing the determined energy action.

13. The non-transitory, machine-readable storage medium of claim 12, wherein determining the energy action includes composing and optimizing a sample average approximation of a cost function for the energy storage component and energy consumption system.

14. The non-transitory, machine-readable storage medium of claim 13, wherein composing the sample average approximation of the cost function includes generating a predetermined number of random load trajectories for the energy consumption system, each load trajectory including a random load at each of the predetermined time intervals based on a respective forecast mean and variance of the obtained load forecast.

15. The non-transitory, machine-readable storage medium of claim 14, wherein the sample average approximation of the cost function is formed as an average, over the plurality of random load trajectories, of a maximum difference between the load trajectory and respective energy actions for the plurality of time intervals.

16. The non-transitory, machine-readable storage medium of claim 15, wherein the sample average approximation of the cost function is constrained by a predetermined maximum charging rate, a predetermined maximum discharging rate, and a predetermined maximum capacity of the energy storage component.

17. The non-transitory, machine-readable storage medium of claim 12, wherein the load forecast is obtained at each of the plurality of predetermined time intervals during the predetermined time period.

18. The non-transitory, machine-readable storage medium of claim 12, further comprising iteratively executing the observing the charge state and load, the determining the energy action, and the executing the determined energy action over a plurality of the predetermined time periods collectively forming an energy procurement period, and tracking a peak energy purchase for the procurement period over the plurality of the predetermined time periods.

19. A system to reduce a peak energy procurement, the system comprising:

an input interface;
an output interface; and
processing circuitry, wherein the processing circuitry is configured to:

obtain, via the input interface, a load forecast for an energy consumption system; and
at each of a plurality of predetermined time intervals during a predetermined time period:

observe, based on input obtained via the input interface, a charge state of an energy storage component and a load presented by the energy consumption system;

determine an energy action for the energy storage component as a function of the load forecast, observed load and observed charge state; and

provide, via the output interface, a control output that causes execution of the determined energy action.

20. The system of claim 19, wherein determining the energy action includes composing and optimizing a sample average approximation of a cost function for the energy storage component and energy consumption system.

**FIG. 1**

**FIG. 2**

**FIG. 3**

**FIG. 4**

**FIG. 5**

**FIG. 6**

700 ⟍

```
            ┌─────────────────────┐
            │       Start.        │─── 702
            └─────────────────────┘
                      │
                      ▼
            ┌─────────────────────┐
            │ Set parameters (e.g., time │─── 704
            │     increment).     │
            └─────────────────────┘
                      │
                      ▼
            ┌─────────────────────┐
            │ Obtain forecasting mean and │─── 706
            │      variance.      │
            └─────────────────────┘
                      │
                      ▼
            ┌─────────────────────┐
            │  Generate random load  │
            │ trajectories according to mean │─── 708
            │    and variance.    │
            └─────────────────────┘
                      │
                      ▼
            ┌─────────────────────┐
      ┌────▶│ Observe storage component │─── 710
      │     │      and load.      │
      │     └─────────────────────┘
      │               │
      │               ▼
      │     ┌─────────────────────┐
      │     │ Compose sample average │
      │     │ approximation of demand charge │─── 712
      │     │    cost function.   │
      │     └─────────────────────┘
      │               │
      │               ▼
      │     ┌─────────────────────┐
      │     │ Optimize sample average │
      │     │ approximation of demand charge │─── 714
      │     │ cost function for minimum cost. │
      │     └─────────────────────┘
      │               │
      │               ▼
      │     ┌─────────────────────┐
      │     │ Execute determined energy │─── 716
      │     │      action.        │
      │     └─────────────────────┘
      │               │
      │               ▼
      │     ┌─────────────────────┐
      │     │ Update parameters (e.g., time │─── 718
      │     │     increment).     │
      │     └─────────────────────┘
      │               │
      │               ▼
      │            ◇ 720
      │          ╱ End of ╲
      └─────────◁ planning  ▷
                 ╲ period? ╱
                     ◇
                      │
                      ▼
            ┌─────────────────────┐
            │        End.         │─── 722
            └─────────────────────┘
```

**FIG. 7**

**FIG. 8A**

**FIG. 8B**

900 ⟍

**FIG. 9**

FIG. 10A

FIG. 10B

FIG. 10C

FIG. 10D

FIG. 10E

Europäisches
Patentamt

European
Patent Office

Office européen
des brevets

**EUROPEAN SEARCH REPORT**

Application Number

EP 17 17 4555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REIHANI EHSAN ET AL: "Load commitment of distribution grid with high penetration of photovoltaics (PV) using hybrid series-parallel prediction algorithm and storage", ELECTRIC POWER SYSTEMS RESEARCH, vol. 131, February 2016 (2016-02), pages 224-230, XP029326594, ISSN: 0378-7796, DOI: 10.1016/J.EPSR.2015.09.004 * abstract * * chapters 1, 2 and 3 * | 1-20 | INV. G06Q50/06 H02J3/00 |
| X | REIHANI EHSAN ET AL: "Energy management at the distribution grid using a Battery Energy Storage System (BESS)", INTERNATIONAL JOURNAL OF ELECTRICAL POWER & ENERGY SYSTEMS, vol. 77, May 2016 (2016-05), pages 337-344, XP029383694, ISSN: 0142-0615, DOI: 10.1016/J.IJEPES.2015.11.035 * page 337 - page 340 * | 1-20 | |
| X | US 2015/261239 A1 (ZHANG WEI [JP] ET AL) 17 September 2015 (2015-09-17) * abstract * * paragraph [0052] - paragraph [0086] * * paragraph [0113] - paragraph [0124] * * paragraph [0134] - paragraph [0151] * | 1-20 | TECHNICAL FIELDS SEARCHED (IPC) G06Q H02J |

The present search report has been drawn up for all claims

| Place of search | Date of completion of the search | Examiner |
|---|---|---|
| Munich | 25 July 2017 | Chauvet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## EP 3 252 700 A1

**ANNEX TO THE EUROPEAN SEARCH REPORT
ON EUROPEAN PATENT APPLICATION NO.**

EP 17 17 4555

This annex lists the patent family members relating to the patent documents cited in  the above-mentioned European search report.
The members are as contained in the European Patent Office EDP file on
The European Patent Office is in no way liable for these particulars which are merely given for the purpose of information.

25-07-2017

| Patent document cited in search report | Publication date | Patent family member(s) | Publication date |
|---|---|---|---|
| US 2015261239 A1 | 17-09-2015 | JP 2015177623 A | 05-10-2015 |
| | | SG 10201501710Y A | 29-10-2015 |
| | | US 2015261239 A1 | 17-09-2015 |

EPO FORM P0459

For more details about this annex : see Official Journal of the European Patent Office, No. 12/82